# EUROPEAN PATENT APPLICATION

(11) **EP 1 678 998 A1**
(43) Date of publication of application: **12.07.2006**
(21) Application number: 06100126.9
(22) Date of filing: 06.01.2006
(51) Int. Cl.: A01G 9/24, F28D 20/02

(54) **Method and system for heating/cooling a greenhouse**

(30) Priority: 07.01.2005 NL 1027979
(71) Applicant: Westland Energie Beheer B.V., 2685 ZG Poeldijk (NL)
(72) Inventor: van Marion, Peter, 2685 BR, Poeldijk (NL); Coolen, Egidius Antonius Johannes Maria, 2661 BW, Bergschenhoek (NL)
(74) Representative: van Westenbrugge, Andries

(57) **Abstract**

Method and system for heating/cooling a greenhouse (1). Heat is absorbed or, alternatively, dissipated in the greenhouse with the aid of bodies containing a medium containing a substance that undergoes a phase transformation at the important temperature. That is to say, for example, a substance is used that changes from the solid state to the liquid state at approximately 22 °C, as a result of which an appreciable amount of heat can be absorbed/released. According to the invention it is proposed to move these bodies into and out of the greenhouse with the aid of trucks (5) on a transport system (3) already present in the greenhouse (1). Consequently, such a transport system (3), such as (tubular) rails, can be used in a more optimum manner and heating/cooling can be provided in a simple manner.

## Description

The present invention relates to a method for cooling/heating a greenhouse, comprising introducing into and/or removing from said greenhouse bodies containing a heat-retaining medium, which medium comprises a substance that undergoes a phase transformation close to the desired temperature in the greenhouse. Such a method is generally known in the state of the art. For instance, in US 4 510 921 a system is described where material that undergoes phase transformation under the influence of heat, such as a calcium and/or sodium salt, is present in the greenhouse. As a result of the phase transition, large amounts of heat can be absorbed or released. In the case of the constructions in the state of the art such materials which exhibit a phase transition at the desired temperature in the greenhouse are used as a buffer, as a result of which the effect of cooling and/or solar radiation can be tempered and in the long term a more constant temperature can be achieved.

Here a greenhouse is understood to be a cultivation area for plants, preferably with translucent walls/roofs.

The trend to aim for completely closed greenhouses can also be recognised in the state of the state of the art. That is to say greenhouses where aeration from outside is no longer used except in emergency situations. The temperature control is very much more complex with such greenhouses. It is found that in the longer term, in general (depending on the site where the greenhouse is erected), heat has to be removed from the greenhouse. Of course this applies mainly in the summer and other conditions prevail in the winter. In any event under certain conditions it can be necessary to supply and/or remove heat during a somewhat longer period. That is to say, in such cases buffering action on its own is not sufficient despite the fact that, in the very long term, the amount of heat to be supplied/removed is not particularly large.

The aim of the present invention is to provide a method by means of which it is possible to supply heat to a greenhouse or to remove it therefrom over the course of a day. This aim is realised with a method as described above in that said introduction and/or removal comprises the movement of said bodies along an existing transport system in said greenhouse for products and/or equipment.

According to the present invention the bodies containing a heat-retaining medium do not serve exclusively as a buffer, but are also actively moved into and out of the greenhouse in order, in this way, to replenish heat absorbed/cold released. According to the present invention this movement takes place with a transport system that is already present in the greenhouse. After all, in greenhouses both products and a wide variety of equipment are moved. Rail trucks for tubes are, for example, used for products. Other transport systems that are known in the state of the art are used for moving lighting/screening/harvesting machines and the like. Such transport systems can be located on the floor of the greenhouse, halfway up or fixed to truss beams and the like.

Heat absorption/release using the bodies described above is a gradual process. That is to say the transport described above can give priority to the transport of products or other activities that are carried out within the greenhouse. However, it is found that most of the time transport tracks are not used and at those points in time the transport of the truck containing the bodies according to the present invention can take place.

Such trucks can simply be moved outside. As a result, for example, cooling can be provided overnight by the release of heat from the bodies. Heating-up is, of course, also possible during the day, after which the greenhouse can be heated again at night using the bodies heated up outside.

Another option is to bring the bodies into a special temperature-controlled room, the temperature of which differs from the outside temperature. Such a room can be partly cooled/heated with a cooling/heating system based on an underground water store, optionally combined with a heat pump.

It is possible to place the bodies in individual trucks and to move these into and out of the greenhouse in the manner described above. In this case such trucks can be designed to be brought into the vicinity of plants and more particularly into the vicinity of plant carriers. After they have been moved out of the greenhouse, the trucks can optionally be brought back into the greenhouse again immediately with another load of bodies.

However, it is also possible to combine these with the plant carriers. In this case the plant carriers are mobile and examples thereof are roll containers, roll troughs and the like. It will be understood that any medium known in the state of the art can be used for the medium that undergoes a phase transition. In this context consideration is given in particular to salts, such as hydrates. Various types of bodies can also be used, each with a different phase transition temperature, as a result of which, firstly, different temperatures can be achieved in the greenhouse (for example depending on the stage of growth of the plants) and, secondly, by mixing different bodies a specific temperature range that is optimum can be achieved. Of course, the method described above can be combined with a heat buffer present in the greenhouse, which can also be based on materials with a phase transition at a temperature that is close to the desired temperature in the greenhouse.

The bodies in which the medium is accommodated can have any conceivable shape, such as a spherical shape, flat and the like. This shape is preferably optimised for heat exchange and/or changeability.

The positioning of the bodies in the greenhouse depends on the transport system, on the desired effect, preferably high for cooling and preferably low for heating, and the requirements of the plants concerned.

The present invention also relates to a system for cooling/heating a greenhouse, comprising a number of bodies that can be introduced into said greenhouse/removed therefrom, containing a heat-retaining medium, said medium comprising a substance that undergoes a phase transformation close to the desired temperature in the greenhouse, wherein said system comprises trucks in which said bodies are arranged, as well as an existing transport system in said greenhouse for said trucks, which transport system is designed for moving plants or equipment for the greenhouse.

The invention will be explained in more detail below with reference to an illustrative embodiment shown in the drawing. In the drawing:
Fig. 1 shows, highly diagrammatically, a first embodiment of the invention; and
Fig. 2 shows, highly diagrammatically, a second embodiment of the invention.

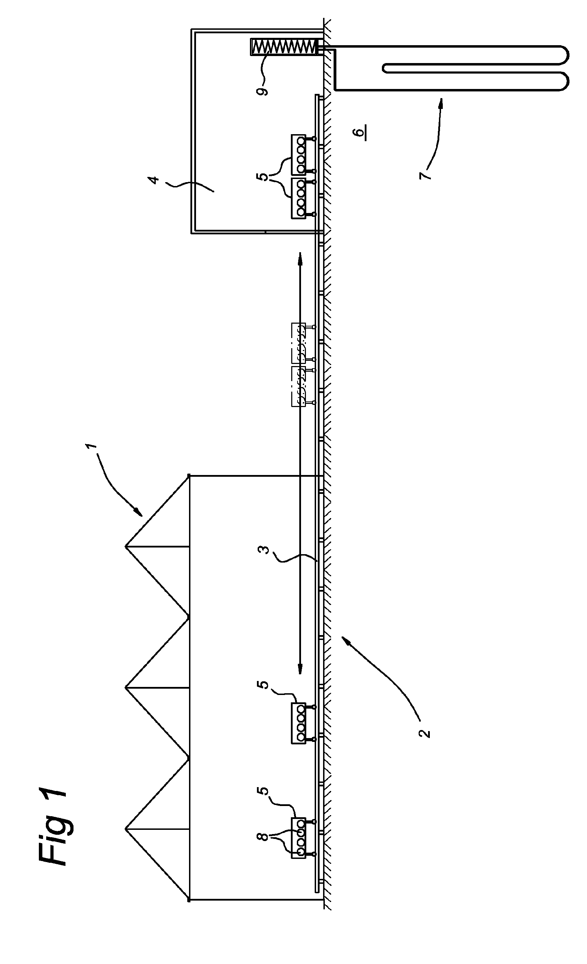

In Fig. 1 a greenhouse is indicated by 1. The customary cultivation stages or roll containers and other constructions and plants are not shown. Only a rail system 3 that is part of a larger system 2 according to the invention is shown. This system comprises trucks 5 that can move over the rail system and a large number of ball-shaped bodies 8 have been arranged in these trucks 5, in which bodies a substance is incorporated that undergoes a phase transition at a specific temperature, for example 21 °C. The trucks can be moved into and out of the greenhouse along rails 3 from/to a room 4 some distance away. A heat exchanger 9 that provides cooling in the summer via a system of pipes 7 installed in the ground is installed in this room 4.

In summertime conditions the trucks 5 with bodies 8 are used for cooling the greenhouse. To this end the substance in the bodies 8 is cooled down so far in the room 4 that this undergoes a phase transition, for example from liquid to solid. In this state the trucks are run into the greenhouse 1 at the point when cooling is required or can be anticipated within a few hours. As a result of an increase in temperature in the greenhouse heat will be absorbed by the bodies 8. This brings about a phase transformation, which means that large amounts of heat can be absorbed. The substance in the bodies 8 will then assume a liquid state, after which the capacity to absorb heat is largely used up. The trucks 5 can then be returned to the room 4. This can be done individually or in a group. The above movement can, for example, be combined with the movement of roll containers or roll troughs. The trucks 5 can be fitted underneath such mobile plant carriers. According to the present invention the trucks 5 use a transport system, shown here on the ground, that is already present in the greenhouse.

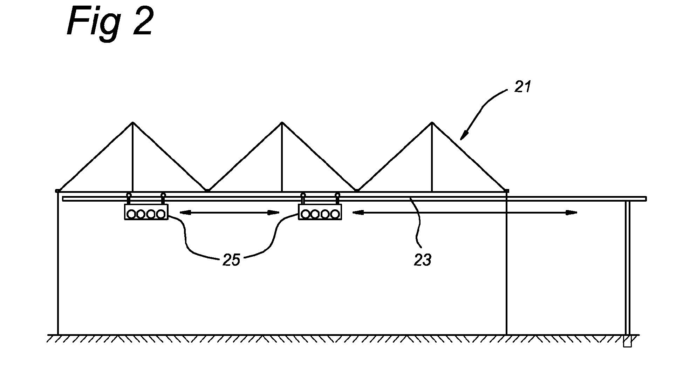

A variant of the present invention is shown in Fig. 2. In this case the greenhouse is indicated by 21, whilst the rails are indicated by 23 and the trucks by 25. It appears that this is a transport system at elevated level. The link with an external room can be achieved in a manner analogous to that in Fig. 1. It is also possible to make use of the outside air. If the system is used for cooling, the trucks 25, after absorbing heat, can be moved outside and can cool down overnight so they can be run back into the greenhouse the next day, after the phase transition has taken place outside, where the phase transformation can take place once more.

It is clear that the present invention can not only be used for cooling greenhouses but also for heating. The various arrangements can even be made dependent on the season (summer or winter). With the present invention it is possible on the basis of bodies 8 that are cheap and can be produced in large numbers to achieve a relatively large heating surface, as a result of which a relatively rapid response to solar gain or cooling is possible and consequently the temperature in the greenhouse can be controlled as well as possible. In this way it is possible to keep the temperature in a greenhouse within a desirable range of, for example, 15 - 25 °C, depending on the plants cultivated, the phase of cultivation and the time of day.

It will be understood that by varying the number of trucks 5, 25 moved into and out of the greenhouse the temperature can be controlled. This can be achieved by moving more or fewer groups of trucks relative to the greenhouse or by using larger or smaller groups in each transfer.

The system described above is particularly unsusceptible to breakdowns. In fact, if there is a power cut, there will be no immediate loss of cooling/heating. In addition, there is a very large buffer capacity in the trucks 5, which in general is sufficient for several hours. Consequently, costly emergency generators are not needed.

The cooling or heating in a greenhouse can optionally be enhanced by passing air through the trucks 5 over the bodies 8 in a forced manner. To this end the trucks can be run to a position in front of fans in the greenhouse, but it is also possible to provide the trucks themselves with such fans or other air transport means.

After reading the above description variants will be immediately apparent to those skilled in the art that are obvious in the light of the above description and fall within the scope of the appended claims. For instance, the rail system described above can be replaced by any other transport system known in greenhouse construction.

## Claims

1. Method for cooling/heating a greenhouse, comprising introducing into and/or removing from said greenhouse bodies containing a heat-retaining medium, which medium comprises a substance that undergoes a phase transformation close to the desired temperature in the greenhouse, **characterised in that** said introduction and/or removal comprises the movement of said bodies along an existing transport system in said greenhouse for products and/or equipment.

2. Method according to Claim 1, wherein said temperature is controlled by introducing/removing more or fewer bodies into/from the greenhouse.

3. Method according to one of the preceding claims, wherein said bodies are situated in the greenhouse during a first part of a day and situated outside the greenhouse during another part of said day, wherein heat is supplied to said bodies/heat is released from said bodies during said first part and heat is released from said bodies/heat is supplied to said bodies during said second part of said day.

4. Method according to one of the preceding claims, wherein said movement comprises wheeled displacement.

5. Method according to one of the preceding claims, wherein said bodies are situated underneath plants.

6. Method according to one of the preceding claims, wherein bodies with different substances are used that have a different phase transition temperature.

7. System (2) for cooling/heating a greenhouse (1), comprising a number of bodies that can be introduced into said greenhouse/removed therefrom, containing a heat-retaining medium, which medium comprises a substance that undergoes a phase transformation close to the desired temperature in the greenhouse, **characterised in that** said system comprises trucks (5) in which said bodies are arranged, as well as an existing transport system (3) in said greenhouse for said trucks, said transport system being designed for moving plants or equipment for the greenhouse.

8. System according to Claim 7, wherein said transport system comprises a rail system (3, 23).

9. System according to Claim 7 or 8 , wherein said transport system extends outside said greenhouse to a room (4) at a temperature that differs for part of the day from the temperature in said greenhouse.

10. System according to one of Claims 7 - 9, wherein said truck is designed for interaction with a mobile plant carrier.
